## Europäisches Patentamt

## European Patent Office

## Office européen des brevets

(11) Veröffentlichungsnummer: **0 213 221**
**B1**

(12) # EUROPÄISCHE PATENTSCHRIFT

(45) Veröffentlichungstag der Patentschrift:
**05.04.89**

(51) Int. Cl.⁴: **H04N 9/64**, H04N 5/60

(21) Anmeldenummer: **85110734.2**

(22) Anmeldetag: **27.08.85**

(54) **Frequenzumsetzung eines für Farbfernsehempfänger übertragenen HF-Signals.**

(43) Veröffentlichungstag der Anmeldung:
**11.03.87 Patentblatt 87/11**

(45) Bekanntmachung des Hinweises auf die Patenterteilung:
**05.04.89 Patentblatt 89/14**

(84) Benannte Vertragsstaaten:
**DE FR GB IT NL**

(56) Entgegenhaltungen:
**EP-A- 0 122 538**

**FUNKSCHAU, Band 51, Nr. 25, 7. Dezember 1979, Seiten 75-78, München, DE; P. MEYRAT: "Vergrösserung der Übertragungskapazität von Kabelfernsehnetzen"**

(73) Patentinhaber: **Deutsche ITT Industries GmbH, Hans-Bunte-Strasse 19 Postfach 840, D-7800 Freiburg(DE)**

(72) Erfinder: **Gassmann, Gerhard Günter, Dipl.-Ing., Vogelsang 5, D-7266 Neuweiler-Agenbach(DE)**
Erfinder: **Schat, Hermannus, Habichtweg 26, D-7800 Freiburg(DE)**
Erfinder: **Elmis, Herbert, Ing. grad., Berliner Strasse 86, D-7809 Denzlingen(DE)**
Erfinder: **Novotny, Bernd, Ing. grad., Belchenstrasse 12, D-7803 Gundelfingen(DE)**
Erfinder: **Kappeler, Otmar, Dipl.-Ing., Zähringerstrasse 22, D-7844 Neuenburg(DE)**
Erfinder: **Ehrhardt, Dietmar, Dr. Ing., Fliederweg 10, D-7800 Freiburg(DE)**

## Beschreibung

Die Erfindung betrifft die Frequenzumsetzung eines für Farbfernsehempfänger bildträger- und tonträgerfrequent übertragenen HF-Signals nach der "Dritten Methode" mittels einer entsprechenden Frequenzfaltung, welche die Frequenzen Bild-, des Farb- und mindestens eines Tonträgers in das Basisband transformiert erscheinen läßt, vergleiche den Oberbegriff des Anspruchs 1. Eine derartige Frequenzumsetzung ist in der Offenlegungsschrift DE-A 3 313 867 beschrieben; die "Dritte Methode" geht auf das Buch H. Meinke und F.W. Gundlach "Taschenbuch der Hochfrequenztechnik", 2. Auflage, Berlin 1962, Seiten 1497 bis 1500 zurück.

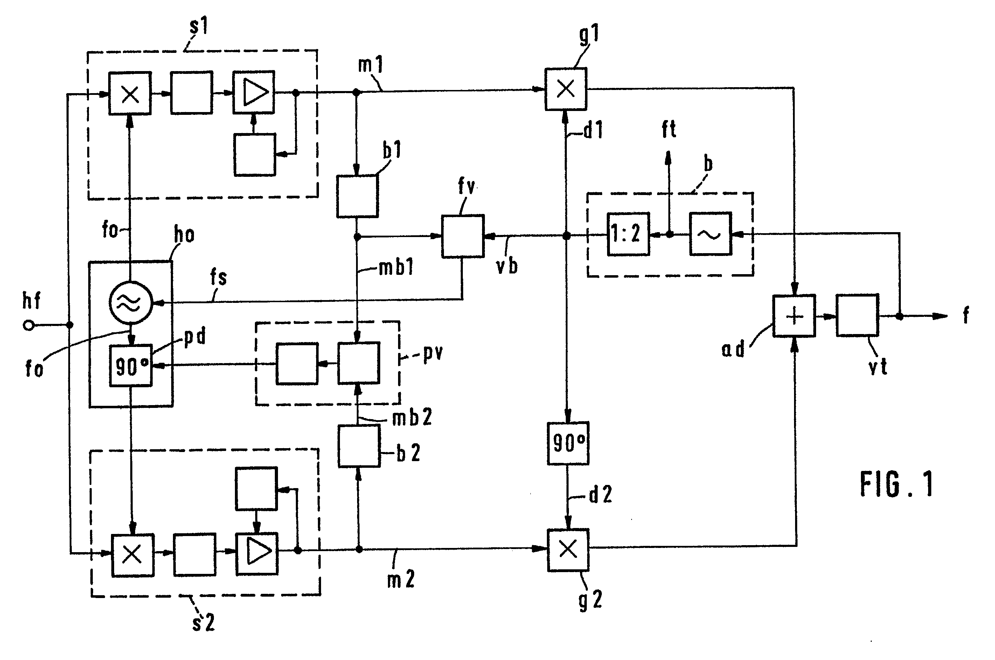

Zum Verständnis des der Erfindung zugrundeliegenden Problems wird zunächst anhand der Fig. 1 bis 4 auf die vorbeschriebene Anordnung näher eingegangen.

Bei der vorbeschriebenen Frequenzumsetzung ist die als Umsetzungsfrequenz oder Mischungsfrequenz fo gewählte Frequenz eines Oszillators ho die genaue Mittenfrequenz zwischen der Frequenz des empfangenen Bildträgers bt und der des empfangenen Farbträgers ft'. Diese Frequenzumsetzung mittels einer derartigen Hochfrequenzmischung wird daher auch als Zentralfaltung bezeichnet. Durch die Hochfrequenzmischung wird das HF-Signal hf so in das Basisband, d.h. von der Frequenz 0 Hz ausgehend, transformiert, daß die Frequenz des transformierten Bildträgers bt* und die des transformierten Farbträgers ft* exakt zusammenfallen. Diese Frequenz ist die halbe Frequenz des Farbträgers ft des Farb-Bild-Austast-Synchron-Signalgemischs einschließlich des Tonsignals, des Basissignals f.

Fig. 1 zeigt in Form eines Blockschaltbildes ein Beispiel des Standes der Technik,
Fig. 2 zeigt in schematischer Form das Signalspektrum des HF-Signals,
Fig. 3 zeigt in schematischer Form das Signalspektrum des in das Basisband transformierten Signalgemisches mit doppelter Frequenzbelegung, und
Fig. 4 zeigt in schematischer Form das Signalspektrum des Basissignals in der üblichen Basisbandlage.

Die in der Offenlegungsschrift DE-A 3 313 867 angegebene Schaltung zur Frequenzumsetzung mittels Zentralfaltung entspricht der Schaltung nach Fig. 1. Das HF-Signal hf liegt als Eingangssignal am Eingang des ersten bzw. des zweiten Signalmischers s1, s2. Diese enthalten jeweils eine Mischerschaltung mit zwei Eingängen, deren Ausgang einen Tiefpaß speist, dessen Durchlaßbereich gleich der halben HF-Signalbandbreite ist und dessen Ausgang einem Amplitudenregelverstärker zugeführt ist. Das in der Amplitude geregelte Ausgangssignal ist dann das Ausgangssignal m1, m2 des ersten, bzw. des zweiten Signalmischers s1, s2.

Der in der Frequenz ziehbare Oszillator ho erzeugt das Umsetzungssignal fo, das dem ersten Signalmischer s1 direkt und dem zweiten Signalmischer s2 über das 90-Grad-Phasendrehglied pd zugeführt ist. Das erste Mischungssignal m1 speist den ersten Demodulator g1 und den ersten Begrenzer b1. Das zweite Mischungssignal m2 speist den zweiten Demodulator g2 und den zweiten Begrenzer b2. Das Ausgangssignal des ersten Begrenzers b1 ist das erste begrenzte Mischungssignal mb1 und das des zweiten Begrenzers b2 das zweite begrenzte Mischungssignal mb2. Jeweils eines dieser beiden Signale ist jeweils einem von zwei Eingängen des Phasenvergleichers pv zugeleitet. Dessen Ausgangssignal steuert die genaue Phasendrehung des 90-Grad-Phasendrehgliedes pd.

Der erste bzw. der zweite Demodulator g1, g2 ist ein Synchrondemodulator, dem als Steuersignal das erste bzw. das zweite Demodulationssignal d1, d2 zugeführt ist. Dieses stammt jeweils aus der Burstsignalverarbeitungsschaltung b, wobei das zweite Demodulationssignal d2 um 90° in der Phase gegenüber dem ersten Demodulationssignal d1 gedreht ist.

Das Ausgangssignal der Burstsignalverarbeitungsschaltung b speist als Vergleichssignal vb mit halber Farbträgerfrequenz, bezogen auf die übliche Basisbandlage, den einen Eingang der ersten Frequenzvergleichsschaltung fv. Deren anderem Eingang ist das erste begrenzte Mischungssignal mb1 zugeführt, und deren Ausgangssignal, das Steuersignal fs, steuert die Frequenz des Oszillators ho.

Das Ausgangssignal des ersten Demodulators g1 bzw. das des zweiten Demodulators g2 ist dem Addierer ad zugeführt, dessen Ausgang den Videotiefpaß vt speist, dessen Ausgangssignal das Farb-Bild-Austast-Synchron-Signalgemisch einschließlich des Tonsignals, das Basissignal f, in der üblichen Basisbandlage ist, und dessen Durchlaßbereich gleich der Bandbreite des Basissignals f ist.

Das Basissignal f speist den Eingang der Burstsignalverarbeitungsschaltung b, die den Farbträger ft erzeugt. Sie enthält neben dem Farbträgerfilter den in der Frequenz geregelten Farbträgeroszillator, der auf der Frequenz des Farbträgers schwingt, einen Frequenzteiler, der die Frequenz des Farbträgers ft halbiert und dessen Ausgangssignal mit Vergleichssignal vb bzw. erstem Demodulationssignal d1 bezeichnet ist.

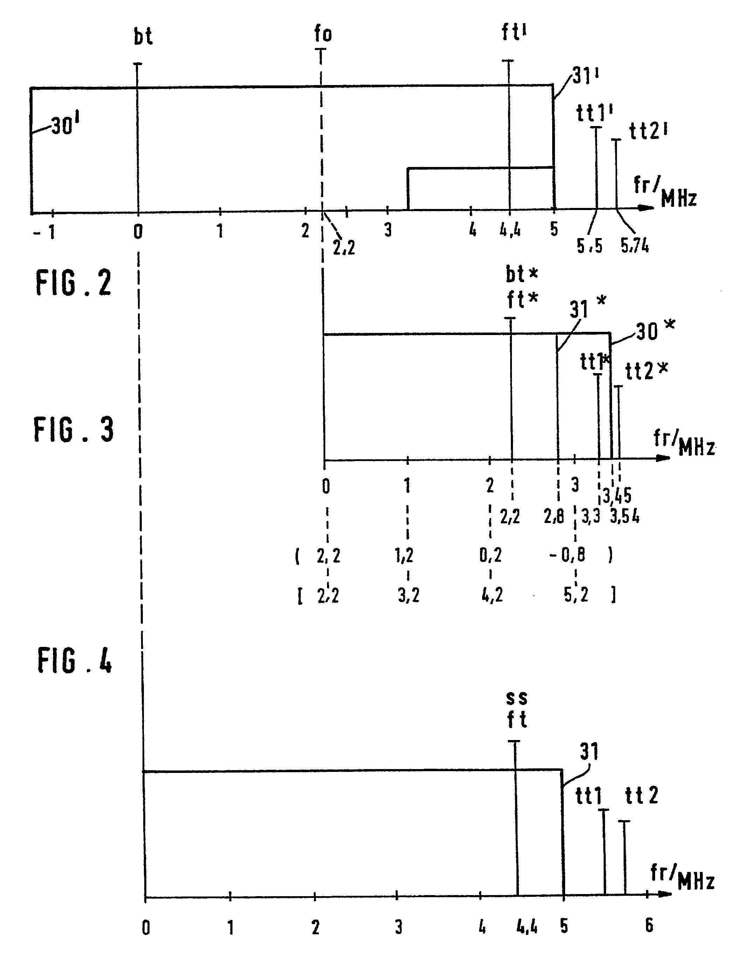

In Fig. 2 ist das Frequenzspektrum des empfangenen HF-Signals hf gezeigt, und zwar normiert auf die Frequenz des Bildträgers bt. Das eigentliche Videoband mit dem Bildträger bt reicht bis zur oberen Videobandgrenze 31' bei 5 MHz. Unterhalb der Bildträgerfrequenz ist die Grenze des übertragenen Restseitenbandes 30' bei der Frequenz −1,25 MHz dargestellt. Ausserhalb der oberen Videobandgrenze 31' sind der erste hochfrequent übertragene Tonträger tt1' bei 5,5 MHz und der zweite hochfrequent übertragene Tonträger tt2' bei 5,74 MHz zu erkennen. Innerhalb des Videobereichs erstreckt sich von 5 MHz bis 3,25 MHz der Bereich der Farbsignalübertragung. Der hochfrequent übertragene Farbträger ft' ist der Einfachheit halber bei 4,4 MHz eingezeichnet. Entsprechend ist das Oszillatorsignal fo des Oszillators ho der Einfachheit halber bei 2,2 MHz eingezeichnet.

Fig. 3 zeigt das durch die Mischung im ersten und im zweiten Signalmischer s1, s2 entstehende Signalgemisch des HF-Signals hf, das in das Basisband transformiert ist und eine Doppelbelegung des Frequenzbereichs von 0 Hz an aufweist. Daß die Bandbreite dieses transformierten Signalgemisches nur der halben Bandbreite des HF-Signals hf entspricht, ist auch an der absoluten Skalierung zu sehen, die von 0 MHz bis 3 MHz eingetragen ist, die linke Hälfte des Spektrums aus Fig. 2, also die Hälfte des Spektrums, die unterhalb der Frequenz des Oszillatorsignals fo liegt, erscheint somit gleichsam um diese Frequenz zu positiven Werten hin umgeklappt. Die zweite, in runden Klammern angegebene Skalierung bezieht sich daher auf den linken umgeklappten Teil des Spektrums und die dritte, in eckigen Klammern angegebene Skalierung auf die ursprüngliche vom Bildträger bt ausgehende Normierung von Fig. 2.

In dem Frequenzspektrum ist zu sehen, daß die Frequenz des transformierten Bildträgers bt* und die des transformierten Farbträgers ft* bei der Frequenz 2,2 MHz zusammenfallen. Der transformierte Tonträger tt1* liegt noch innerhalb des übertragenen Restseitenbandes, während der transformierte Tonträger tt2* gerade außerhalb davon liegt.

In Fig. 4 ist das Signalspektrum des Basissignals f, nämlich des Farb-Bild-Austast-Synchron-Signalgemisches zusammen mit dem Tonsignal, in der üblichen Basisbandlage schematisch dargestellt. Der Bildträger ist identisch mit der Frequenz 0 Hz und entfällt daher. Der Farbträger ft liegt bei 4,4 MHz — es gilt auch hier die obige Vereinfachung. Die obere Videobandgrenze 31 liegt bei 5 MHz, darüber befinden sich die beiden Tonträger tt1, tt2.

Durch die Rückgängigmachung der Doppelfrequenzbelegung mittels der zweiten Frequenzfaltung als Rückfaltung mit halber Farbträgerfrequenz ergibt sich dann das Störsignal ss bei 4,4 MHz, wenn die Rückfaltung nicht so erfolgt, daß die Addition mittels des Addierers ad für das inverse Spektrum eine totale Auslöschung bewirkt; mit der Störfrequenz ss muß in praxi daher immer gerechnet werden. Durch die zweite Faltung ist ferner das in Fig. 3 noch vorhandene Restseitenband verschwunden.

Das erwähnte Zusammenfallen des transformierten Bildträgers bt* und des transformierten Farbträgers ft* hat den Sinn, dafür zu sorgen, daß auf dem Fernsehschirm keine störenden Moires durch die Differenzfrequenz zwischen dem transformierten Bildträger bt* und dem transformierten Farbträger ft* dann entstehen, wenn die beiden Zweige des Empfängers mit den beiden Hochfrequenzmischern keine absolute Identität aufweisen. Um dieses Ziel der absoluten Übereinstimmung dieser speziellen Frequenzen zu erreichen, muß der Oszillator ho exakt auf die gewählte Mischungsfrequenz fo synchronisiert werden. Dies ist aber bei Fernsehsignalen, die Trägerfrequenzen bis zu 900 MHz aufweisen, eine fast unrealisierbare Forderung, weil der Synchronisierregelkreis so schnell reagieren muß, daß auftretende Frequenzschwankungen des Oszillators ho sofort im gegenläufigen Sinn ausgeregelt werden. Praktisch unmöglich ist es, die geforderte Synchronisation zu erreichen, wenn der Oszillator ho ein Frequenzmodulationsrauschen aufweist. Selbst wenn dessen Frequenzhub sehr klein ist, so ist bei 900 MHz sein Phasenhub größer als 360 Grad. Diesem Frequenzmodulationsrauschen kann theoretisch nur mit extrem breitbandigen Regelkreisen gegengesteuert werden. Diese sind aber sehr instabil und damit in der Praxis nicht zuverlässig realisierbar.

Der in den Ansprüchen gekennzeichneten Erfindung liegt daher die Aufgabe zugrunde, die bekannte Frequenzumsetzung so abzuändern und weiterzubilden, daß die Beseitigung der auf dem Fernsehschirm störenden Moires auf eine andere Weise erreicht wird, die bei weitem keine so schwierig zu lösende Synchronisation erforderlich macht. Darüber hinaus soll eine dazu entsprechende Schaltung angegeben werden, die zudem monolithisch integrierbar ist und auch erlaubt, den Tonteil des Fernsehempfängers mit geringem Aufwand zu integrieren und darüber hinaus noch zusätzliche qualitative Vorteile zu ermöglichen.

Die Erfindung greift zur Lösung der Aufgabe die in "Funkschau", 1979, Heft 25, Seiten 75 bis 78 in anderem Zusammenhang beschriebene Maßnahme auf, wie mittels eines Frequenz-Offsets Intermodulationsstörungen, die sich als Moire auf dem Bildschirm zeigen und die in Kabelfernsehnetzen durch die Nachbarkanäle, insbesondere durch deren Trägeranteile, verursacht sind, möglichst beseitigt werden. Dies wird erreicht, weil der ursprünglich einheitlich festgelegte Kanalabstand geringfügig verändert wird. Dieser Frequenz-Offset benachbarter Träger bewirkt, daß die verbleibenden Intermodulationsstörungen möglichst nur solche Frequenzen enthalten, die auf dem Bildschirm ein nur wenig störendes Moire ergeben. Die Intermodulationsfrequenzen sollen für diesen speziellen Fall möglichst kein ganzzahliges Verhältnis zur Zeilenfrequenz aufweisen.

Die Erfinder haben erkannt, daß von der in der DE-A 3 313 867 strikt geforderten Frequenzbedingung für die Mischungsfrequenz, nämlich genau in der Mitte zwischen Bild- und Farbhilfsträgerfrequenz zu liegen, zur Lösung der Aufgabe abgewichen werden kann und muß.

Ein Vorteil der Erfindung ergibt sich unmittelbar aus der Lösung der Aufgabe. Ein weiterer Vorteil besteht darin, daß durch die direkte Umsetzung in das Basisband bereits innerhalb der Frequenzumsetzung das im Basisband befindliche Signalgemisch digitalisiert werden kann, um eine präzisere, signalwegunabhängige Singalverarbeitung zu erreichen. Ferner sind in digitalisierter Form spezielle Filterstrukturen mit steilen Selektionsflanken leichter realisierbar, welche insbesondere beim Zweitonverfahren die bei dem Faltungsverfahren störend auftretenden Nachbartonträger sicher unterdrücken. Schließlich besteht ein Vorteil der Erfindung darin, daß zur Zurückfaltung des frequenzmäßig doppelbelegten Basisbandes in das Basissignal f dessen Betrag und dessen Frequenz über eine digitale Quadratsummenbildung mit anschließender digitaler Quadratwurzelziehung exakt zu erreichen ist, was beides zusammen gleich einer digitalen geometrischen Mittelwertbildung ist.

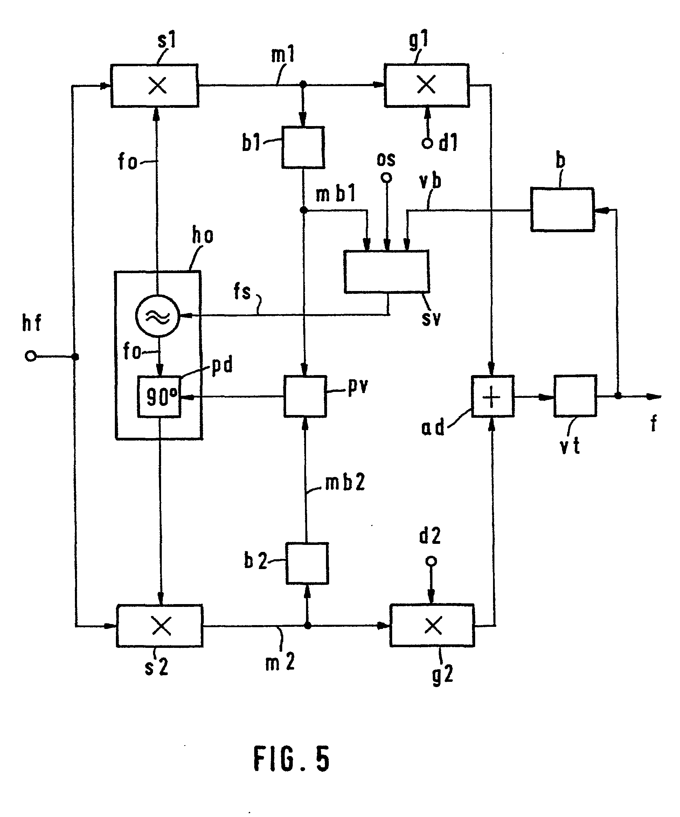

Die Erfindung wird nun anhand der weiteren Fig. 5 bis 13 der Zeichnung näher erläutert.

Fig. 5 zeigt in Form eines Blockschaltbildes ein Ausführungsbeispiel einer Farbfernsehempfänger-schaltung zur Durchführung der Frequenzumset-zung nach der Erfindung,

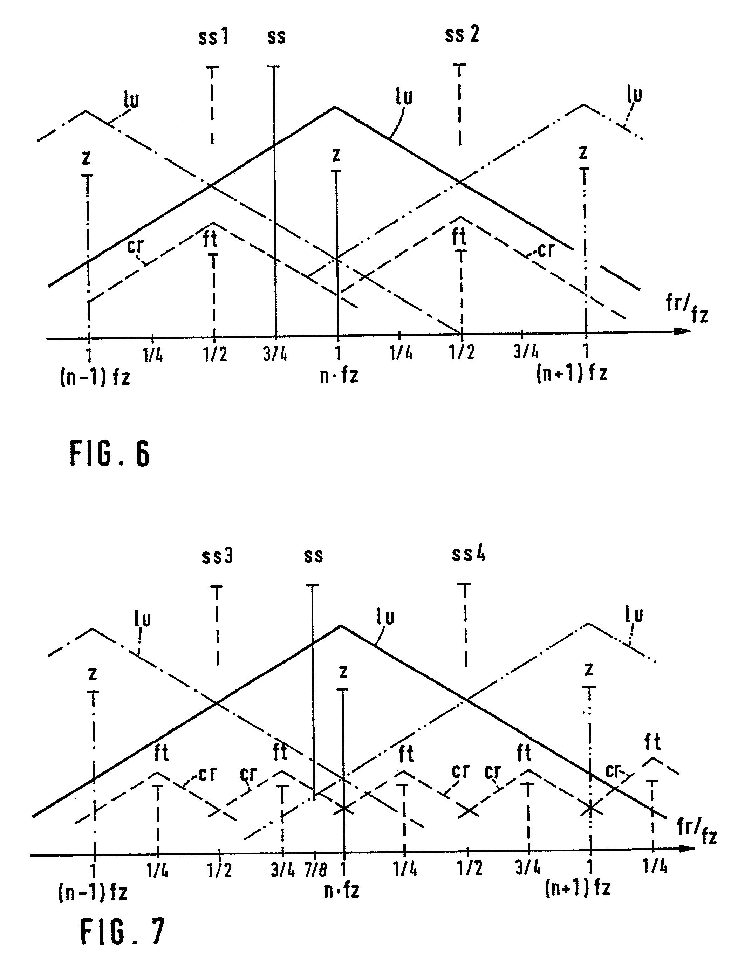

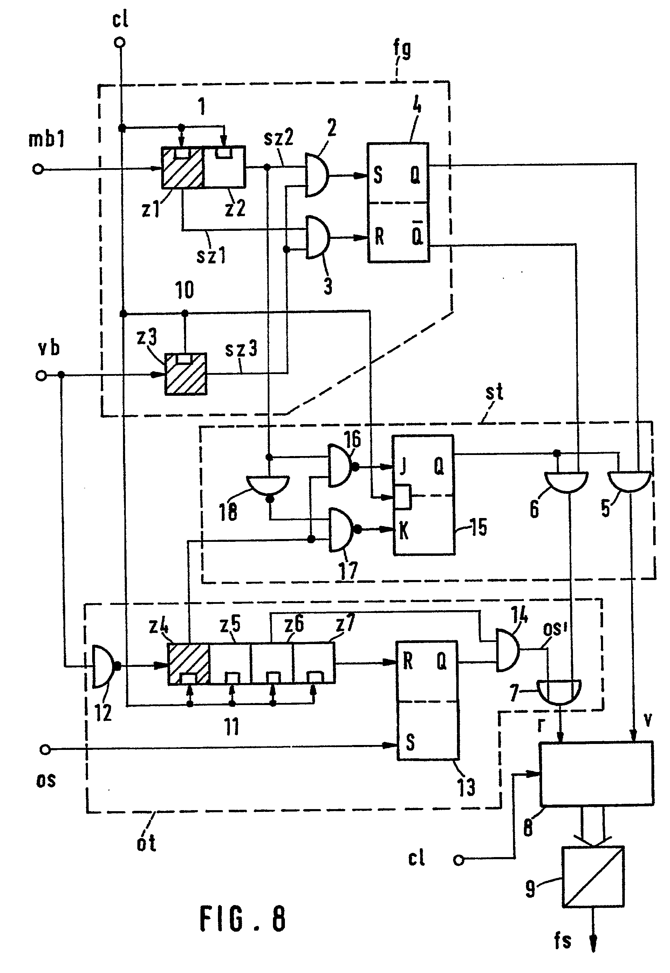

Fig. 6 zeigt in schematischer Form ein Teil des Signalspektrums nach der Frequenzumsetzung bei NTSC-Norm,

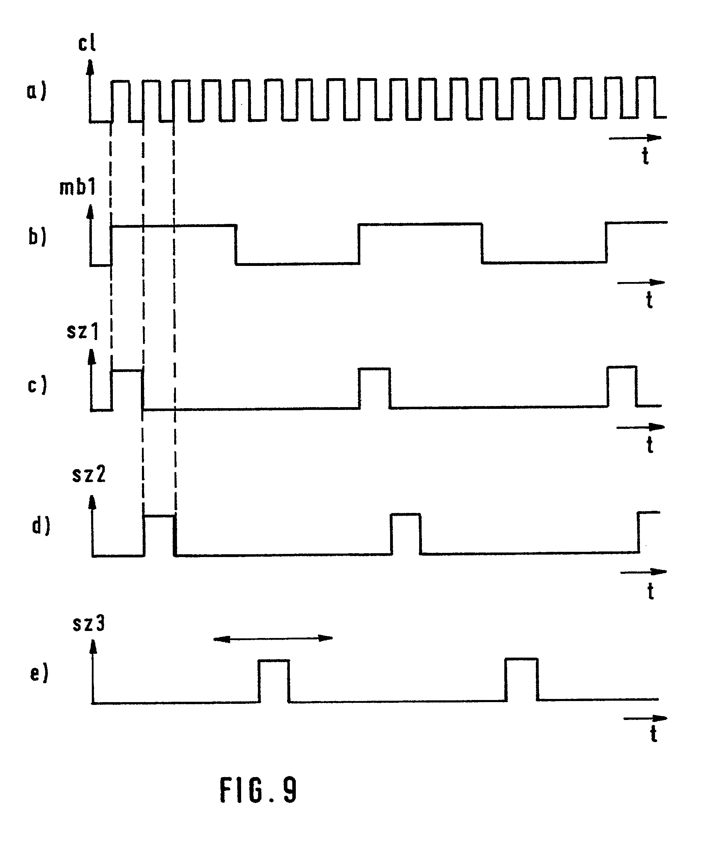

Fig. 7 zeigt in schematischer Form ein Teil des Signalspektrums nach der Frequenzumsetzung bei PAL-Norm,

Fig. 8 zeigt als Blockschaltbild ein Ausführungsbeispiel der Schwebungsvergleichsschaltung nach Fig. 5,

Fig. 9 zeigt schematisch die zeitliche Beziehung einiger Signale der Schwebungsvergleichsschaltung nach Fig. 8,

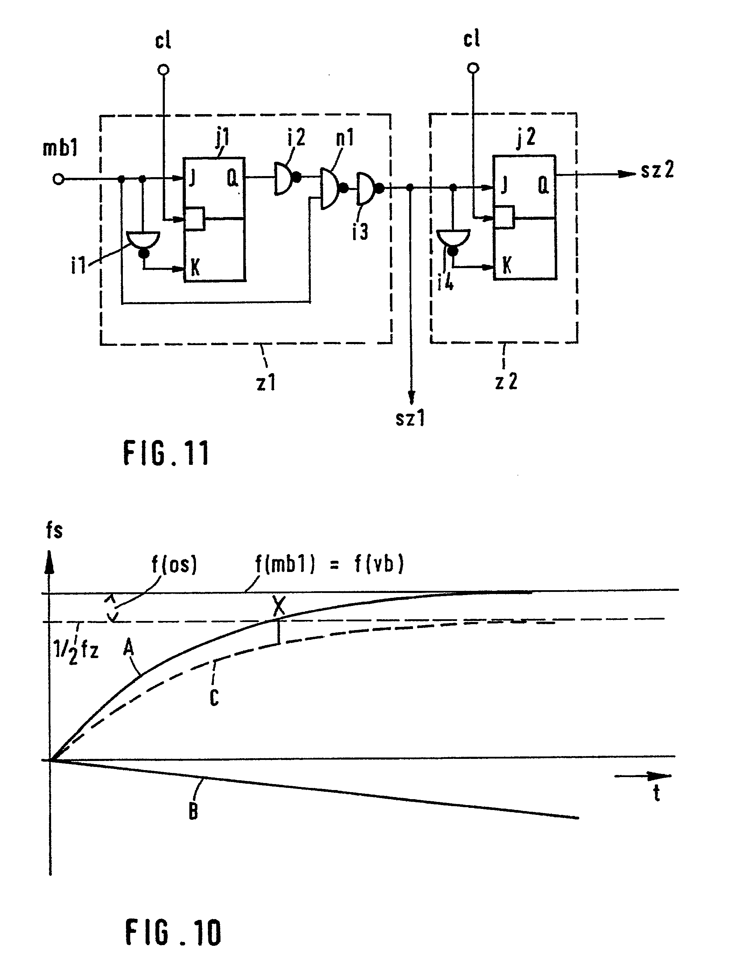

Fig. 10 zeigt verschiedene Kurven zur Erläuterung der Fig. 8,

Fig. 11 zeigt als Blockschaltbild ein Detail der Schwebungsvergleichsschaltung nach Fig. 8,

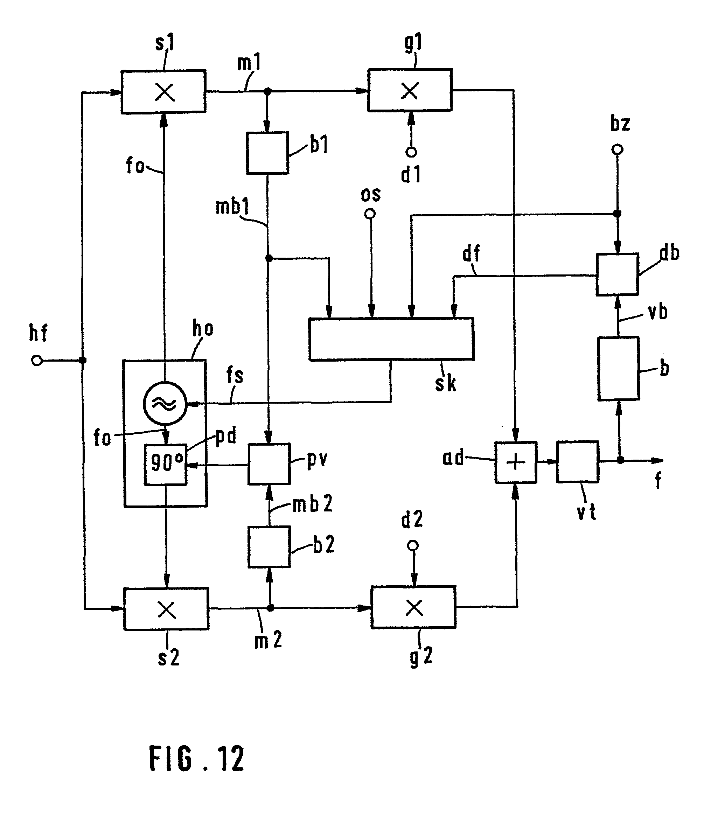

Fig. 12 zeigt als Blockschaltbild ein weiteres Ausführungsbeispiel einer Farbfernsehempfänger schaltung zur Durchführung der Frequenzumsetzung nach der Erfindung, und

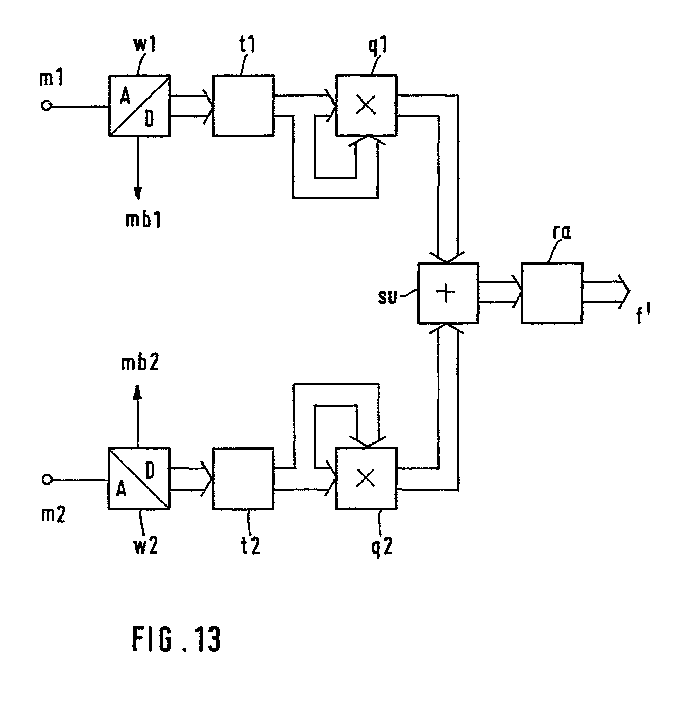

Fig. 13 zeigt als Blockschaltbild ein Ausführungsbeispiel zur Erzeugung des digitalen Basissignals mittels der Betragsbildung aus erstem und zweitem Mischungssignal.

In Fig. 5 ist in Form eines Blockschaltbildes ein Ausführungsbeispiel einer Farbfernsehempfängerschaltung gezeigt, welche die Durchführung der Frequenzumsetzung nach der Erfindung ermöglicht. Die Frequenzumsetzung im ersten bzw. im zweiten Signalmischer s1, s2 erfolgt nicht mehr wie bei Fig. 1 mit der genauen Mittenfrequenz zwischen dem hochfrequent übertragenen Bildträger bt und dem hochfrequent übertragenen Farbträger ft', sondern mit einer davon abweichenden Frequenz, wie im folgenden beschrieben ist.

Das HF-Signal hf ist dem ersten bzw. dem zweiten Signalmischer s1, s2 zugeführt, dessen jeweiligem zweiten Eingang das erste Ausgangssignal des Oszillators ho, das Oszillatorsignal fo, bzw. dessen zweites Ausgangssignal zugeleitet ist. Das zweite Ausgangssignal des Oszillators ho ist gegenüber dem Oszillatorsignal fo mittels des 90°-Phasendrehgliedes pd um 90° in der Phase gedreht.

Das Ausgangssignal des ersten Signalmischers s1, das erste Mischungssignal m1, speist den Ein-gang des Demodulators g1 und des ersten Begrenzers b1. Das Ausgangssignal des zweiten Signalmischers s2, das zweite Mischungssignal m2, speist den Eingang des zweiten Demodulators g2 und den Eingang des zweiten Begrenzers b2. Das Ausgangssignal des ersten Begrenzers b1, das erste begrenzte Mischungssignal mb1, und das Ausgangssignal des zweiten Begrenzers b2, das zweite begrenzte Mischungssignal mb2, speisen die beiden Eingänge des Phasenvergleichers pv, dessen Ausgangssignal das 90°-Phasendrehglied pd auf dem exakten Wert der Phasendrehung hält. Dem zweiten Eingang des ersten Demodulators g1 ist das erste Demodulationssignal d1 und dem zweiten Eingang des zweiten Demodulators g2 das zweite Demodulationssignal d2 zugeführt.

Das Ausgangssignal des ersten Demodulators g1 bzw. das des zweiten Demodulators g2 speist jeweils einen Eingang des Addierers ad, dessen Ausgangssignal dem Videotiefpaß vt zugeführt ist und dessen Ausgang das Basissignal f ist. Der Durchlaßbereich des Videotiefpasses vt entspricht dabei der Bandbreite des Basissignals f. Das Basissignal f speist die Burstsignalverarbeitungsschaltung b, die das Vergleichssignal vb erzeugt, welches einen Eingang der Schwebungsvergleichsschaltung sv speist. Das erste begrenzte Mischungssignal mb1 und das Offsetsignal os sind weiteren Eingängen der Schwebungsvergleichsschaltung sv zugeführt. Deren Ausgangssignal steuert als das Steuersignal fs die Frequenz des Oszillators ho.

Der Begriffsbestimmung und -klarheit dienen die folgenden Festlegungen und Definitionen:

Ein Phasenvergleicher erzeugt eine phasenabhängige Regelspannung, indem die Phasen zweier zugeführter gleichfrequenter Wechselspannungen miteinander verglichen werden.

Eine frequenzabhängige Regelspannung wird von einem Frequenzdiskriminator erzeugt, der die Frequenz einer Wechselspannung mit einer Festfrequenz vergleicht.

Eine verstimmungsabhängige Regelspannung wird von einer Frequenzvergleichsschaltung erzeugt, in der die Frequenzen zweier Wechselspannungen miteinander verglichen werden. Weicht z.B. die Frequenz der einen Wechselspannung von der anderen in positiver Richtung ab, so entsteht eine positive Regelspannung; weicht sie in negativer Richtung ab, so ist die Regelspannung negativ.

Eine Schwebungsvergleichsschaltung ist eine Weiterbildung der bereits beschriebenen verstimmungsabhängigen Frequenzvergleichsschaltung; es ist ein fester Wert und eine bestimmte Richtung der Verstimmung gewünscht, und die Abweichungen davon sollen ausgeregelt werden.

Um eine derartige Schaltung handelt es sich bei der angegebenen Schwebungsvergleichsschaltung sv. Der vorgegebene Betrag des festen Verstimmungswertes wird durch die Frequenz des Offsetsignals os eingestellt, das aus dem Zeilenablenksignal oder aus den Horizontalsynchronimpulsen in einfacher Weise z.B. mittels Frequenzteilern ableitbar ist.

Die Bestimmung der genauen Offsetfrequenz des Offset-Signals os für den Frequenzversatz des Störsignals ss wird nun in Fig. 6 anhand eines stärker aufgelösten Ausschnittes der Spektralverteilung des Basissignals f für den NTSC-Farbfernseh-Standard gezeigt. Zu sehen ist der Spektralbereich dreier Spektrallinien z der Zeilenfrequenz fz. Um sie herum erstreckt sich, mit schematischer Am-plitudenverteilung angegeben, der jeweilige Lumi-nanzspektralbereich lu. Genau in der Mitte zwischen zwei Spektrallinien z der Zeilenfrequenz fz befindet sich um die gedachte Spektrallinie des Farbträgers ft herum der Chrominanzspektralbereich cr.

Aufgrund der Gegebenheiten der Fernseh-Standards besteht das Luminanzspektrum lu bekanntlich aus Spektrallinien im Abstand der Zeilenfrequenz, jeweils umgeben von Nebenlinien im Abstand der Halbbildfrequenz. Wird ein Testbild mit nur senkrechten Streifen gezeigt, so fallen die Nebenlinien weg. Werden nur horizontale Streifen gezeigt, so hat der Bildinhalt nur Spektrallinien bei ganzzahligen Vielfachen der Halbbildfrequenz und weiterer Oberwellen. Lediglich die Zeilensynchronisierimpulse erzeugen in diesem Fall noch zusätzliche Spektren mit Zeilenfrequenz-Abstand.

In gleicher Weise verhält sich das Spektrum des Chrominanzsignals, allerdings mit dem Unterschied, daß das Chrominanzspektrum auf rund 1 MHz Bandbreite begrenzt ist. Das Spektrum eines NTSC-Chrominanzsignals ist also bei einem beliebigen Bild ein Spektrum mit ca. 15-kHz-Abstand, jeweils umgeben von Nebenspektren im Abstand von 60 Hz, genauso wie beim Luminanzsignal. Die Nebenlinien um jeweils eine Hauptspektrallinie fallen nicht schneller ab als beim Luminanzsignal. Bei PAL ist allerdings durch die "Verschmierung" wegen der Mittelung zweier zeitlich benachbarter Zeilen eine Verringerung der Bandbreite der Nebenlinien um den Faktor 2 vorhanden, aber erst nach der Mittelung im Empfänger, nicht bei der Übertragung und auch noch nicht im Empfangsteil des Fernsehempfängers.

Das durch die Rückfaltung entstehende Störsignal ss liegt bei Frequenzgleichheit von erstem begrenztem Mischungssignal mb1 und Vergleichssignal vb genau auf einer Frequenz, die um ein Viertel der Zeilenfrequenz fz kleiner als sie ist.

Es ist bekannt, daß Bildstörsignale bei Fernsehsignalen in ihrer Störwirkung auf den Beobachter ein Minimum haben, wenn ihre Frequenzlage genau in der Mitte zwischen zwei Spektrallinien z der Zeilenfrequenz fz liegt, vgl. z.B. R. Theile "Fernsehtechnik", Band 1, Berlin 1973, Seiten 71 bis 78.

Nach der Erfindung wird nun das bei der Rückfaltung entstehende Störsignal ss entweder um ein Viertel der Zeilenfrequez fz zu kleineren Frequenzen hin verschoben und wird damit zu einem nicht mehr störenden Störsignal ss1 mit einer Offsetfrequenz (1/4)fz oder das Störsignal ss wird um drei Viertel der Zeilenfrequenz zu höheren Frequenzen hin verschoben und erscheint dort als Störsignal ss2 mit der Offsetfrequenz +(3/4)fz. Selbstverständlich kann das Störsignal in beide Richtungen jeweils noch zusätzlich um ganze Vielfache der Zeilenfrequenz fz verschoben werden, denn das subjektiv empfundene Störminimum gilt auch für diese Frequenzwerte.

In Fig. 7 ist ähnlich wie in Fig. 6 die Spektralfeinverteilung im Bereich dreier Spektrallinien z der Zeilenfrequenz fz gezeigt, und zwar für den PAL-Farbfernseh-Standard. Im Unterschied zu Fig. 6 ist zu sehen, daß der Chrominanzspektralbereich cr zwischen jeweils zwei Spektrallinien z doppelt vorhanden ist, und zwar liegt er einmal im Bereich eines Viertels der Zeilenfrequenz und einmal im Bereich von drei Vierteln der Zeilenfrequenz. Dies hat seine Ursache in der Plus/minus-90°-Farbträgerumschaltung beim PAL-Farbfernseh-Standard.

Zu beachten ist, daß der Chrominanzspektralbereich cr wie beim NTSC-Farbfernseh-Standard ohne eigentlichen Farbträger ist. Während des Bildes wird der eigentliche Farbträger unterdrückt. Er wird bekanntermaßen nur als Farbsynchronsignal während einer kurzen Dauer des Zeilenrücklaufsignals auf der hinteren Schwarzschulter des Farb-Bild-Austast-Synchron-Signalgemisches gesendet. Dieser eigentliche Farbträger liegt beim PAL-Farbfernseh-Standard auf einer Spektrallinie, die um ein Viertel der Zeilenfrequenz fz unterhalb der Spektrallinie z der Zeilenfrequenz liegt. Daher ist auch bei der exakten Zentralfaltung das Störsignal ss entsprechend diesen beiden Frequenzen auf eine Spektrallinie festgelegt, die ein Achtel der Zeilenfrequenz unterhalb einer Spektrallinie z der Zeilenfrequenz fz liegt.

Aus der angegebenen Lage des Störsignals ss ergibt sich die erforderliche Frequenzverschiebung und damit die Frequenz des Offsetsignals os. Einmal kann die Mitte zwischen zwei Spektrallinien z der Zeilenfrequenz fz durch eine Frequenzverschiebung von −(3/8)fz erreicht werden. Es ist dann das Störsignal ss3 mit der Offsetfrequenz von −(3/8)fz. Zum anderen führt eine Vergrößerung der Frequenz um fünf Achtel der Zeilenfrequenz zu dem Störsignal ss4 mit der Offsetfrequenz von +(5/8)fz. In beiden Fällen ist für den Betrachter subjektiv das Störminimum erreicht.

Fig. 8 zeigt die digitale Ausführungsform einer Schwebungsvergleichsschaltung. Ihr ist der Systemtakt ci mit der vierfachen Farbträgerfrequenz zugeführt. Als Funktionseinheiten enthält die Schaltung die Frequenzvergleichsdigitalschaltung fg, die vergleicht, ob die Frequenz des Vergleichssignals vb größer oder kleiner als die Frequenz des ersten begrenzten Mischungssignals mb1 ist; die Übernahmesteuerschaltung st, welche die Übernahme des Ergebnisses der Frequenzvergleichsdigitalschaltung fg in den Vorwärts-Rückwärts-Zähler 8 steuert; die Offsetstufe ot, welche entsprechend dem Offsetsignal os zusätzliche Zählimpulse auf den Vorwärts-Rückwärts-Zähler 8 gibt, und schließlich noch den Digital-Analog-Wandler 9, der dem Vorwärts-Rückwärts-Zähler 8 nachgeschaltet ist und das Steuersignal fs für die Frequenzsteuerung des Oszillators ho erzeugt.

Das erste begrenzte Mischungssignal mb1 ist dem Serieneingang des zweistufigen Schieberegisters 1 zugeführt. Dessen Eingangsstufe wird von der ersten Schieberegisterzelle z1 und dessen Ausgangsstufe von der zweiten Schieberegisterzelle z2 gebildet. Deren Ausgangssignal sz2 ist dem jeweils einen Eingang des ersten UND-Gatters 2 und des ersten NAND-Gatters 16 sowie dem ersten Inverter 18 zugeführt. Das Ausgangssignal sz1 der ersten Schieberegisterzelle z1 ist ferner dem Eingang des zweiten UND-Gatters 3 zugeführt. Der freie Eingang des ersten UND-Gatters 2 ist mit dem des zweiten UND-Gatters 3 verbunden, und sie liegen gemeinsam am Ausgang des einstufigen zweiten Schieberegisters 10, das nur aus der dritten Schieberegisterzelle z3 besteht und eingangsseitig vom Vergleichsignal vb gespeist ist und das Ausgangssignal sz3 abgibt.

Der Ausgang des ersten UND-Gatters 2 bzw. des zweiten UND-Gatters 3 ist auf den S- bzw. den R-Eingang des ersten RS-Flipflops 4 geschaltet. Dessen $\overline{Q}$- bzw. Q-Ausgangssignal speist jeweils einen Eingang des dritten UND-Gatters 6 bzw. des vierten UND-Gatters 5. Deren beide anderen Eingänge sind miteinander und mit dem Q-Ausgang des JK-Flipflops 15 verbunden. Der Ausgang des ersten Inverters 18 speist den ersten Eingang des zweiten NAND-Gatters 17, dessen zweiter Eingang mit dem zweiten Eingang des ersten NAND-Gatters 16 verbunden ist. Dessen Ausgang bzw. der Ausgang des zweiten NAND-Gatters 17 ist mit dem J- bzw. mit dem K-Eingang des JK-Flipflops 15 verbunden.

Das Vergleichssignal vb ist über den zweiten Inverter 12 dem Serieneingang des vierstufigen dritten Schieberegisters 11 zugeführt, dessen Eingangsstufe die vierte Schieberegisterzelle z4 ist, der die fünfte, sechste und siebte Schieberegisterzelle z5, z6, z7 nachgeschaltet sind.

Der Ausgang der vierten Schieberegisterzelle z4 speist den zweiten Eingang des zweiten NAND-Gatters 17 und damit ebenfalls den zweiten Eingang des ersten NAND-Gatters 16.

Das Offsetsignal os speist den S-Eingang des zweiten RS-Flipflops 13, dessen R-Eingang vom Ausgangssignal der siebten Schieberegisterzelle z7 gespeist ist. Der Q-Ausgang des zweiten RS-Flipflops ist mit einem Eingang des fünften UND-Gatters 14 verbunden, dessen anderer Eingang am Ausgang der sechsten Schieberegisterzelle z6 liegt.

Der Ausgang des dritten UND-Gatters 6 bzw. der des fünften UND-Gatters 14 liegen jeweils an einem der beiden Eingänge des ODER-Gatters 7, dessen Ausgangssignal als Rückwärtszählsignal r des Vorwärts-Rückwärts-Zählers 8 dient. Als dessen Vorwärts-Enablesignal v dient das Ausgangssignal des vierten UND-Gatters 5 und als dessen Vorwärtszählsignal der Systemtakt cl. Die Zählerstandsignale des Vorwärts-Rückwärts-Zählers 8 sind dem Digital-Analog-Wandler 9 zugeführt, dessen Ausgangssignal das analoge Steuersignal fs zur Frequenzsteuerung des Oszillators ho ist.

Das Ausgangssignal des fünften UND-Gatters 14 ist das aus dem Offsetsignal os abgeleitete Signal os', das mit dem Ausgangssignal des UND-Gatters 6 mittels des ODER-Gatters 7 kombiniert wird wodurch dieses geringfügig derart verändert wird, daß der Oszillator ho die Frequenz seines Ausgangssignals um die dem Offsetsignal os entsprechende Frequenz ändert.

Der Systemtakt cl ist als Taktsignal dem ersten, bzw., zweiten und dem dritten Schieberegister 1, 10, 11 sowie dem Takteingang des JK-Flipflops 15 zugeführt. Die übrigen Teilschaltungen der Fig. 8 sind ungetaktet; es können dafür selbstverständlich auch getaktete Teilschaltungen eingesetzt werden, die dann ebenfalls vom Systemtakt cl zu takten sind.

In Fig. 9 ist der Zeitablauf einiger charakteristischer Signale des Ausführungsbeispieles der Schwebungsvergleichsschaltung sv nach Fig. 8 gezeigt.

Der in Fig. 9a gezeigte Signalverlauf stellt den Systemtakt cl dar.

In Fig. 9b ist der Signalverlauf des ersten begrenzten Mischungssignals mb1 gezeigt. Durch die Begrenzung entsteht dabei das Puls-Pausen-Verhältnis 1:1 mit einer Frequenz gleich einem Achtel der Systemtakt-Frequenz, was sich aus der Zentralfaltung ergibt.

In Fig. 9c ist das Ausgangssignal sz1 der ersten Schieberegisterzelle z1 gezeigt, dessen Vorderflanke identisch mit der Vorderflanke des ersten begrenzten Mischungssignals mb1 ist, jedoch nur während einer Taktperiode des Systemtakts cl im oberen Schaltzustand bleibt.

In Fig. 9d ist das Ausgangssignal sz2 der zweiten Schieberegisterzelle z2 gezeigt. Es ist gegen das Signal der Fig. 9c um eine Taktperiode verzögert. Diese beiden Signale entsprechen einem zeitlich nacheinander sich öffnenden Signalfenster, welches die Entscheidung erlaubt, ob eine zu vergleichende Frequenz höher oder niedriger als die Frequenz des ersten begrenzten Mischungssignals mb1 ist. Eine Auswertlogik muß nur entscheiden, in welchem Zeitfenster die zu vergleichende Frequenz zuerst erscheint; dann ist eine Aussage möglich, ob diese Frequenz höher oder niedriger als die Frequenz des ersten begrenzten Mischungssignals mb1 ist. Diese Unterscheidung wird durch die Frequenzvergleichsdigitalschaltung fg vorgenommen (Fig. 8).

Das mit dem ersten begrenzten Mischungssignal mb1 bezüglich der Frequenz zu vergleichende Signal, nämlich das Vergleichssignal vb, ist schematisch in Fig. 9e in Form des Ausgangssignals sz3 der dritten Schieberegisterzelle z3 dargestellt. Das Vergleichssignal vb wird dabei durch die Schieberegisterzelle z3 in ein Signal umgewandelt, das innerhalb seiner Signalperiode nur während einer Taktperiode im oberen Schaltzustand bleibt. Mit diesem Signal wird nun der Zeitfenstervergleich durchgeführt.

Zur Funktion der Anordnung nach Fig. 8 ist noch folgendes anzumerken:

Die Teilschaltungen 1, 2, 3, 4, 10 bilden die Frequenzvergleichsdigitalschaltung fg im strengen Sinne. Ihre Wirkungsweise ergibt sich an Hand von Fig. 9.

Im Einschaltmoment laufen nun die Impulse des Vergleichssignals vb relativ zu denen des ersten begrenzten Mischungssignals mb1 mit einer unbekannten Differenzfrequenz gegeneinander, die jedoch i.a. durch eine quarzstabilisierte Tunerabstimmung um nicht mehr als +/− 200 kHz von der Sollabstimmung abweichen wird. Wenn die Impulse des Ausgangssignals sz3, also die Impulse in Fig. 9e, relativ zu den Impulsen in Fig. 9c und 9d von links nach rechts durchlaufen, so kommen sie zuerst mit den Impulsen der Fig. 9c und erst später mit den Impulsen der Fig. 9d zur Deckung. Das hat zur Folge, daß zuerst das UND-Gatter 2 und erst anschließend das UND-Gatter 3 geöffnet wird und somit das RS-Flip-Flop 4 in dieser Reihenfolge gesetzt und zurückgesetzt wird. Im zeitlichen Mittel ist es also in der Stellung, die das UND-Gatter 3 bedingt.

Läuft dagegen das Ausgangssignal sz3 relativ zum Signal mb1 in umgekehrter Richtung durch, so ist das RS-Flip-Flop 4 im zeitlichen Mittel in der vom UND-Gatter 2 bedingten Stellung. Die Flip-Flop-Ausgänge liefern also Signale, die, wenn man sie mit einem RC-Glied glätten würde, der echten verstimmungsabhängigen Regelspannung einer analogen Phasen- und Frequenzvergleichsschaltung entspricht, die das Ziel hat, die Differenzfrequenz null zu erreichen.

Alle anderen Teile der Anordnung nach Fig. 8 dienen dazu, auf eine Differenzfrequenz gleich der halben Zeilenfrequenz abzustimmen. Die UND-Gatter 5 und 6 werden von dem JK-Flip-Flop 15 angesteuert, welches gegenüber den Ausgangsimpulsen des UND-Gatters 2 differenzfrequente Impulse abgibt, die gegenüber diesen um 180° versetzt sind. Die UND-Gatter 5 und 6 werden also erst dann geöffnet, wenn das RS-Flip-Flop 4 gerade in der Pausenstellung ist. Das JK-Flip-Flop 15 bekommt seine Impulse vom Schieberegister über die Gatter 16, 17, 18. Wegen des Inverters 12 sind die Ausgangsimpulse der Schieberegisterzellen z3, z4 um 180° gegeneinander verschoben.

Die Teilschaltungen 15, 16, 17, 18 sorgen dafür, daß bei zeitlicher Übereinstimmung der Ausgangsimpulse der Schieberegisterzellen z2, z4 das JK-Flip-Flop 15 am Q-Ausgang den H-Pegel und erst bei Nichtübereinstimmung den L-Pegel annimmt. Dadurch ist sichergestellt, daß pro Differenzfrequenzperiode nur <u>einmal</u>, aber nicht mehrmals die UND-Gatter 5, 6 geöffnet werden und somit der Zähler 8 nur um einen Schritt weiterzählt. Der Zähler 8 hat die Funktion eines Integrators, denn die hinter dem Digital-Analog-Wandler 9 erscheinende Regelspannung fs nähert sich allmählich ihrem Sollwert. Dieser Integrator arbeitet aber so, daß die Steigung der Regelspannungsänderung um so geringer ist, je geringer inzwischen die Differenzfrequenz infolge der Nachstimmung geworden ist; der Sollwert der Frequenz (Differenzfrequenz null) wird also asymptotisch erreicht.

Fig. 10 zeigt einen solchen zeitlichen Verlauf als Kurve A. Die augenblickliche Steigung dU/dt ist ein Maß für die augenblickliche Abweichung von der Differenzfrequenz null. Würde es gelingen, dieser Steigung eine gegenläufige Steigung (Kurve B) zu überlagern, die einer Abweichung um die halbe Zeilenfrequenz entspricht, so wäre die Steigung null, d.h., die Regelspannung hätte ihren Endzustand bei einer Abweichung um die halbe Zeilenfrequenz erreicht (Kurve C), was dem Punkt X entspricht. Dies wird dadurch erreicht, daß dem Zähler 8 zusätzlich Impulse halber Zeilenfrequenz zugeführt werden, die den Zähler unabhängig von den anderen Zählimpulsen rückwärts zählen lassen. Diese Impulse dürfen nur nicht in den Zählvorgang der anderen Impulse eingreifen.

In Fig. 8 wird dies dadurch erreicht, daß zu einer Zeit, in der keine anderen Impulse eintreffen können, über das ODER-Gatter 7 die erwähnten Rückwärtszählimpulse halber Zeilenfrequenz zugeführt werden. Das Offsetsignal os als diese Impulse halber Zeilenfrequenz setzen das RS-Flip-Flop 13. Die Schieberegisterzelle z6 gibt zu Zeiten Impulse ab, die nicht mit den Zeiten der Impulse der Zelle z3 zusammenfallen, also zu Zeiten, in denen der Zähler 8 mit Sicherheit nicht von anderen Impulsen angesteuert wird. Ist also das RS-Flip-Flop 13 vom Offsetsignal os gesetzt worden, so wird das ODER-Gatter 7 vom UND-Gatter 14 mit einem Umpuls gespeist. Kurz danach wird das RS-Flip-Flop 13 von einem Impuls der Zelle z7 wieder zurückgesetzt, so daß das ODER-Gatter 7 nur kurze Impulse im Rhythmus des Offsetsignals os zugeführt erhält.

Damit ist erreicht, daß die vom Digital-Analog-Wandler 9 abgegebene Regelspannung sich so einstellt, daß die gewünschte Bedingung, nämlich Frequenzabweichung um die halbe Zeilenfrequenz, genau eingehalten wird. Ein wesentlicher Vorteil dieses Schaltungskonzeptes ist es, daß dazu in keiner Weise irgend ein Abgleich erforderlich ist. Andere in Erwägung gezogene Schaltungen hätten den Nachteil gehabt, daß zusätzliche Digitalfilter nötig gewesen wären.

Fig. 11 zeigt eine Ausführungsform des ersten Schieberegisters 1. Die Ausführungsform der ersten Schieberegisterzelle z1 entspricht dabei der Ausführungsform der dritten bzw. der vierten Schieberegisterzelle z3, z4. Alle anderen Schieberegisterzellen können die Ausführungsform der zweiten Schieberegisterzelle z2 haben.

Das erste begrenzte Mischungssignal mb1 ist dem J-Eingang des JK-Flipflops j1 zugeführt. Der K-Eingang ist vom gleichen Signal über den Inverter i1 gespeist. Der Q-Ausgang des JK-Flipflops j1 geht über den Inverter i2 auf den Eingang des NAND-Gatters n1, dessen zweitem Eingang auch das erste begrenzte Mischungssignal mb1 zugeführt ist, und dessen Ausgang über den Inverter i3 zum Ausgang der ersten Schieberegisterzelle z1 führt und den Eingang der zweiten Schieberegisterzelle z2 speist.

Das Ausgangssignal sz1 liegt direkt am J- bzw. über dem Inverter i4 am K-Eingang des JK-Flipflops j2. Dessen Q-Ausgang ist zugleich der Ausgang der zweiten Schieberegisterzelle z2 mit ihrem Ausgangssignal sz2. Am Takteingang der beiden JK-Flipflops j1, j2 liegt der Systemtakt cl.

In Fig. 12 ist ein weiteres Ausführungsbeispiel für die Farbfernsehempfängerschaltung zur Durchführung der Frequenzumsetzung nach der Erfindung gezeigt. Diese Schaltung ist bis auf die folgenden Unterschiede identisch mit der Schaltung nach Fig. 5. Die Schwebungsvergleichsschaltung sv ist durch die Schwebungskorrekturschaltung sk ersetzt. Ihr werden eingangsseitig das erste begrenzte Mischungssignal mb1, das Offsetsignal os, das Bezugssignal bz und das Frequenzdifferenzsignal df zugeführt, wobei die beiden letzten Signale noch zu erläutern sind.

Das Bezugssignal bz hat eine ähnliche Frequenzlage wie das Vergleichssignal vb; es ist aber nicht mehr wie dieses frequenz- und phasenmäßig starr mit dem im Burst enthaltenen Farbsynchronsignal, sondern mit einer anderen fernsehstandardeigenen Frequenz verkoppelt. Dies kann z.B. die Zeilenfrequenz bzw. ein Vielfaches von ihr sein, das als bildverkoppelter Systemtakt Anwendung findet.

Das Frequenzdifferenzsignal df wird gebildet, indem das Bezugssignal bz bzw. das Vergleichssignal vb jeweils einem der beiden Eingänge des Frequenzdifferenz-Bildners db zugeleitet sind, so daß deren Differenzfrequenz die Frequenz des Differenzsignals df ergibt.

Die Funktion der Schwebungskorrekturschaltung sk ist dabei die folgende. Ohne die Wirkung des Frequenzdifferenzsignals df hätte die Schaltung nach Fig. 12 fast die gleiche Funktion wie die Schwebungsvergleichsschaltung sv nach Fig. 5, nur dem Schwebungsvergleich läge das von der Frequenz des Vergleichssignals vb abweichende Bezugssignal bz zugrunde. Diese Frequenzabweichung hätte auch die verstimmmungsabhängig eingestellte Sollschwebungsfrequenz zwischen dem ersten begrenzten Mischungssignal mb1 und dem Bezugssignal bz. Damit läge das Störsignal ss nicht genau in der Mitte zwischen zwei Spektrallinien z der Zeile.

Das Signal für die erforderliche Korrektur des Frequenzwertes wird der Schwebungskorrekturschaltung sk als Frequenzdifferenzsignal df zugeführt. Das Offset-Signal os wird somit in seiner Frequenz je nach dem Vorzeichen der zu korrigierenden Frequenz um die Frequenz des Frequenzdifferenzsignals df erhöht bzw. erniedrigt.

Fig. 13 zeigt, wie in einer weiteren Ausführungsform der Farbfernsehempfängerschaltung das erste bzw. das zweite Mischungssignal m1, m2 vorteilhaft digitalisiert weiterverarbeitet werden kann.

Das erste bzw. das zweite Mischungssignal m1, m2 ist dem ersten bzw. dem zweiten Analog-Digital-Wandler w1, w2 zugeführt, deren jeweiliges Ausgangssignal dem ersten bzw. dem zweiten digitalen Tiefpaß t1, t2 zugeleitet ist, deren Ausgangssignale jeweils die beiden Eingänge des ersten bzw. des zweiten digitalen Quadraturmischers q1, q2 speisen. Der Durchlaßbereich des ersten bzw. des zweiten digitalen Tiefpasses t1, t2 entspricht der halben Bandbreite des Basissignals f.

Ferner dient das Ausgangssignal der höchstwertigen Stelle oder einer Kombination von höchstwertigen Stellen des ersten bzw. des zweiten Analog-Digital-Wandlers w1, w2 als erstes bzw. als zweites begrenztes Mischungssignals mb1, mb2.

Das Ausgangssignal des ersten bzw. des zweiten digitalen Quadraturmischers q1, q2 ist den beiden Eingängen des digitalen Addierers su zugeführt, dessen Ausgangssignal den digitalen Radizierer ra speist. Dessen Ausgangssignal ist das digitalisierte Basissignal f'.

Bei einer Abwandlung der Schaltungsanordnung nach Fig. 5 kann die Schwebungsvergleichsschaltung sv einen Einseitenbandmischer als Offsetmischer enthalten, dessen einem Eingang das erste begrenzte Mischungssignal mb1 oder das Vergleichssignal vb und wobei dessen anderem Eingang das Offset-Signal os zugeführt ist. Ferner kann der Offsetmischer bevorzugt eine Schaltung sein, die zur Impulsfolge ihres ersten Eingangs die Impulsfolge des zweiten Eingangs hinzuaddiert oder von ihr abzieht.

In der zeitgleichen Anmeldung EP-A 213 222 ist eine Fernsehton-Empfangsschaltung für mindestens einen in einem HF-Signal enthaltenen Tonkanal beschrieben. Die Tonsignalverarbeitungsschaltung ist dabei Teil einer Kanaltrennschaltung, die mittels der "Phasenmethode" (= eine spezielle Einseitenband-Frequenzumsetzung) die hochfrequent übertragenen Fernsehtonkanäle in das Basisband transformiert und voneinander trennt; diese "Phasenmethode" kann auch auf Fernsehkanäle angewandt werden, die mittels einer HF-Mischerschaltung in ein festes Zwischenfrequenzband übertragen worden sind. Diese HF-Mischerschaltung kann beispielsweise zur HF-Signalmischung eingangsseitig einen Quadraturmodulator enthalten, auf den diese beschriebene Offsettechnik auch angewendet werden kann.

## Patentansprüche

1. Frequenzumsetzung eines für Farbfernsehempfänger bildträger- und tonträgerfrequent übertragenen HF-Signals (hf) nach der "Dritten Methode" mittels einer entsprechenden Frequenzfaltung, welche die Frequenzen des Bild-, des Farb- und mindestens eines Tonträgers in das Basisband transformiert erscheinen läßt, dadurch gekennzeichnet, daß das dabei aufgrund von unvermeidbaren Unterschiedlichkeiten von Signalwegen auf dem Bildschirm entstehende zeitlich/örtlich veränderliche Moiré mittels eines Frequenzoffsets zwischen jeweils transformierter Bild- und Farbträgerfrequenz unsichtbar gemacht wird, der folgende Werte aufweist:

beim NTSC-Farbfernseh-Standard: $-(1/4+n)fz$ bzw. $+(3/4+n)fz$,
beim PAL-Farbfernseh-Standard: $-(3/8+n)fz$ bzw. $+(5/8+n)fz$,
wobei $n = 0, 1, 2, ...$ und fz die Zeilenfrequenz ist sowie das Plus- bzw. das Minuszeichen die positive bzw. negative Frequenzablage des transformierten Bildträgers (bt*) von der Frequenzgleichheit von transformiertem Bildträger (bt*) und transformiertem Farbträger (ft*) angibt.

2. Farbfernsehempfängerschaltung zur Durchführung der Frequenzumsetzung nach Anspruch 1, die folgende Teilschaltungen enthält:
– einen frequenzgesteuerten Oszillator (ho) mit einem 90°-Phasendrehglied (pd) für ein erstes und ein zweites gegeneinander um 90° phasenverschobenes Ausgangssignal, dessen jeweilige Frequenz innerhalb des Spektrums des HF-Signals (hf) liegt,
– einen ersten Signalmischer (s1), dem das erste Ausgangssignal, das Oszillatorsignal (fo), und das HF-Signal (hf) eingangsseitig zugeführt sind und dessen Ausgangssignal ein erstes Mischungssignal (m1) ist,
– einen zweiten Signalmischer (s2), dem das zweite Ausgangssignal des Oszillators (ho) und das HF-Signal (hf) eingangsseitig zugeführt sind und dessen Ausgangssignal ein zweites Mischungssignal (m2) ist,
– einen ersten bzw. einen zweiten Demodulator (g1, g2), der vom ersten bzw. vom zweiten Mischungssignal (m1, m2) und von einem ersten bzw. von einem zweiten Demodulationssignal (d1, d2) gespeist ist und deren Ausgangssignale über einen Addierer (ad) oder über einen Subtrahierer einem Videotiefpaß (vt) zugeführt sind, dessen Ausgangssignal das Farb-Bild-Austast-Synchron-Signalgemisch einschließlich des Tonsignals (= das Basissignal) (f), in der üblichen Basisbandlage und dessen Durchlaßbereich gleich der Bandbreite des Basissignals (f) ist,

- einen ersten bzw. einen zweiten Begrenzer (b1, b2), dem das erste bzw. das zweite Mischungssignal (m1, m2) zugeführt ist und dessen Ausgangssignal das erste bzw. das zweite begrenzte Mischungssignal (mb1, mb2) ist, und

- eine erste Frequenzvergleichsschaltung (fv), deren erstes Eingangssignal mit halber Farbträgerfrequenz (= Vergleichssignal) (vb), bezogen auf die übliche Basisbandlage, aus einer Burstsignalverarbeitungsschaltung (b) stammt und deren zweites Eingangssignal das erste begrenzte Mischungssignal (mb1) ist sowie deren Ausgangssignal als Steuersignal (fs) der Frequenzeinstellung des Oszillators (ho) dient, gekennzeichnet durch folgende Merkmale:

- als erste Frequenzvergleichsschaltung (fv) dient eine Schwebungsvergleichsschaltung (sv), der zusätzlich zum Vergleichssignal (vb) und zum ersten begrenzten Mischungssignal (mb1) ein Offsetsignal (os) zugeführt ist,

- die Schwebungsvergleichsschaltung (sv) steuert die Frequenz des Oszillators (ho) mittels eines vorzeichenbehafteten Frequenzversatzes derart, daß die Schwebungsfrequenz zwischen dem Vergleichssignal (vb) und dem ersten begrenzten Mischungssignal (mb1) gleich der Frequenz des Offsetsignals (os) ist, und

- die Schwebungsvergleichsschaltung (sv) enthält neben den dem reinen Schwebungsvergleich dienenden Stufen weitere Signalverarbeitungsstufen, die das Steuersignal (fs) für den Oszillator (ho) erzeugen.

3. Farbfernsehempfängerschaltung nach Anspruch 2 zur Durchführung der Frequenzumsetzung nach Anspruch 1, dadurch gekennzeichnet,

- daß bei nach dem NTSC-Farbfernseh-Standard übertragenen HF-Signal (hf) die Frequenz des Offsetsignals (os) entweder −(1/4+n) fz oder +(3/4+n)fz ist, oder

- daß bei nach dem PAL-Farbfernseh-Standard übertragenem HF-Signal (hf) die Frequenz des Offsetsignals (os) entweder −(3/8+n)fz oder +(5/8+n)fz ist, wobei jeweils n = 0, 1, 2, ... und fz die Zeilenfrequenz ist sowie das negative Vorzeichen bzw. das positive Vorzeichen einer Frequenzerniedrigung bzw. einer Frequenzerhöhung des Oszillators (ho) entspricht.

4. Farbfernsehempfängerschaltung nach Anspruch 2 oder 3, dadurch gekennzeichnet, daß die Schwebungsvergleichsschaltung (sv) eine zweite Frequenzvergleichsschaltung enthält, der das erste begrenzte Mischungssignal (mb1) und das Vergleichssignal (vb) eingangsseitig zugeführt sind und deren Ausgangssignal durch Kombination mit einem aus dem Offsetsignal (os) abgeleiteten Signal (os') geringfügig derart verändert ist, daß der Oszillator (ho) die Frequenz seines Ausgangssignals um die dem Offsetsignal (os) entsprechende Frequenz ändert.

5. Farbfernsehempfängerschaltung nach einem der Ansprüche 2 bis 4, gekennzeichnet durch folgende Merkmale,

- die Schwebungsvergleichsschaltung (sv) ist eine von einem Systemtakt (cl) getaktete Digitalschaltung, dessen Phase starr mit der Phase des im Basissignal (f) enthaltenen Farbsynchronsignals verkoppelt ist und dessen Frequenz ein ganzzahliges Vielfaches der Frequenz des Farbsynchronsignals ist, und sie enthält folgende Teilschaltungen:

- eine Frequenzvergleichsdigitalschaltung (fg) als zweite Frequenzvergleichsschaltung,

- eine Übernahmesteuerschaltung (st), die den jeweiligen Ausgangszustand der Frequenzvergleichsdigitalschaltung (fg) als Vorwärts-Enablesignal bzw. als Rückwärts-Zählsignal (r) einem Vorwärts-Rückwärts-Zähler (8) zuleitet, dem als Vorwärtszählsignal der Systemtakt (cl) zugeführt ist,

- eine Offsetstufe (ot), die, vom Offsetsignal (os) gesteuert, zusätzliche Rückwärts-Zählimpulse an den Vorwärts-Rückwärts-Zähler (8) abgibt, und

- einen ersten Signalmischer (s1), dem das erste Ausgangssignal des Oszillators (ho) und das HF-Signal (hf) eingangsseitig zugeführt sind und dessen Ausgangssignal ein erstes Mischungssignal (m1) ist,

- einen zweiten Signalmischer (s2), dem das zweite Ausgangssignal des Oszillators (ho) und das HF-Signal (hf) eingangsseitig zugeführt sind und dessen Ausgangssignal ein zweites Mischungssignal (m2) ist,

- einen ersten bzw. einen zweiten Demodulator (g1, g2), der vom ersten bzw. vom zweiten Mischungssignal (m1, m2) und von einem ersten bzw. von einem zweiten Demodulationssignal (d1, d2) gespeist ist und deren Ausgangssignale über einen Addierer (ad) oder über einen Subtrahierer einem Videotiefpaß (vt) zugeführt sind, dessen Ausgangssignal, das Farb-Bild-Austast-Synchron-Signalgemisch einschließlich des Tonsignals (= das Basissignal) (f) in der üblichen Basisbandlage ist und dessen Durchlaßbereich gleich der Bandbreite des Basissignals (f) ist,

- einen ersten bzw. einen zweiten Begrenzer (b1, b2), dem das erste bzw. das zweite Mischungssignal (m1, m2) zugeführt ist und dessen Ausgangssignal das erste bzw. das zweite begrenzte Mischungssignal (mb1, mb2) ist und

- eine erste Frequenzvergleichsschaltung (fv), deren eines Eingangssignal das erste begrenzte Mischungssignal (mb1) ist und deren Ausgangssignal als Steuersignal (fs) der Frequenzeinstellung des Oszillators (ho) dient, gekennzeichnet durch folgende Merkmale:

- einen Digital-Analog-Wandler (9), der den Zählerstand des Vorwärts-Rückwärts-Zählers (8) in das Steuersignal (fs) umformt.

6. Farbfernsehempfängerschaltung nach Anspruch 2 oder 3, dadurch gekennzeichnet, daß die Schwebungsvergleichsschaltung (sv) einen Enseitenbandmischer als Offsetmischer enthält, dessen einem Eingang das erste begrenzte Mischungssignal (mb1) oder das Vergleichssignal (vb) und dessen anderem Eingang das Offsetsignal (os) zugeführt ist.

7. Farbfernsehempfängerschaltung nach Anspruch 6, dadurch gekennzeichnet, daß der Offsetmischer eine Schaltung ist, die zur Impulsfolge ihres ersten Eingangs die Impulsfolge des zweiten Eingangs hinzuaddiert oder von ihr abzieht.

8. Farbfernsehempfängerschaltung zur Durchführung der Frequenzumsetzung nach Anspruch 1, die folgende Teilschaltungen enthält:
- einen frequenzgesteuerten Oszillator (ho) mit einem 90°-Phasendrehglied (pd) für ein erstes und ein zweites gegeneinander um 90° phasenverschobenes Ausgangssignal, dessen jeweilige Frequenz innerhalb des Spektrums des HF-Signals (hf) liegt,
- das erste Eingangssignal der ersten Frequenzvergleichsschaltung (fv), das Bezugssignal (bz), ist mit seiner Frequenz und seiner Phase mit einer fernsehstandardeigenen Frequenz, insbesondere mit der Zeilenfrequenz (fz) verkoppelt,
- als erste Frequenzvergleichsschaltung (fv) dient eine Schwebungskorrekturschaltung (sk), der das Bezugssignal (bz) und als weitere Eingangssignale ein Offsetsignal (os) und ein Frequenzdifferenzsignal (df) zugeführt sind,
- das Frequenzdifferenzsignal (df) ist ein Signal mit der Differenzfrequenz zwischen der halben Farbträgerfrequenz, bezogen auf die übliche Basisbandlage, und der Frequenz des Bezugssignals (bz),
- die Schwebungskorrekturschaltung (sk) steuert die Frequenz des Oszillators (ho) mittels eines vorzeichenbehafteten Frequenzversatzes derart, daß die Schwebungsfrequenz zwischen der Frequenz des ersten begrenzten Mischungssignales (mb1) und der Summe der vorzeichenrichtig zur Frequenz des Bezugssignals (bz) hinzuaddierten Frequenz des Frequenzdifferenzsignals (df) gleich der Frequenz des Offsetsignals (os) ist, und
- die Schwebungskorrekturschaltung (sk) enthält neben den dem reinen Schwebungskorrekturvergleich dienenden Stufen weitere Signalverarbeitungsstufen, die das Steuersignal (fs) für den Oszillator (ho) erzeugen.

9. Farbfernsehempfängerschaltung nach einem der Ansprüche 2 bis 8, gekennzeichnet durch folgende Merkmale:
- das erste bzw. das zweite Mischungssignal (m1, m2) ist mittels eines ersten bzw. eines zweiten Analog-Digital-Wandlers (w1, w2) digitalisiert und speist jeweils als Datensignal einen ersten bzw. einen zweiten digitalen Tiefpaß (t1, t2), deren Durchlaßbereich gleich der halben Bandbreite des Basissignals (f) ist,
- die jeweiligen Ausgangsdaten des ersten bzw. des zweiten digitalen Tiefpasses (t1, t2) sind jeweils auf die beiden Eingänge eines ersten bzw. eines zweiten digitalen Quadraturmischers (q1, q2) geführt, deren Ausgangsdaten über einen digitalen Addierer (su) oder einen digitalen Subtrahierer einen digitalen Radizierer (ra) speisen,
- das Ausgangssignal des digitalen Radizierers (ra) ist das digitalisierte Basissignal (f'), und
- das erste bzw. das zweite begrenzte Mischungssignal (mb1, mb2) ist das höchstwertige Stellensignal oder eine Kombination einzelner höchstwertiger Stellensignale des jeweiligen Ausgangs des ersten bzw. des zweiten Analog-Digital-Wandlers (w1, w2).

## Claims

1. Frequency conversion of an RF signal transmitted for color-television receivers at the picture- and soundcarrier frequencies by the "third method" using a suitable frequency reversal which makes the frequencies of the picture carrier, the chrominance subcarrier, and at least one sound carrier appear transformed into the baseband, characterized in that the temporally/locally varying moire on the screen resulting from unavoidable signal-path differences is made invisible by an offset between the transformed picture-carrier frequency and the transformed chrominance-subcarrier frequency which has the following values:
in the NTSC color-television standard:
$-(1/4+n)fz$ or $+(3/4+n)fz$, and
in the PAL color-television standard:
$-(3/8+n)fz$ or $+(5/8+n)fz$,
where $n = 0, 1, 2, ...,$ fz is the horizontal frequency, and the plus and minus signs indicate, respectively, the positive and negative frequency deviations of the transformed picture carrier (bt*) from the transformed chrominance subcarrier (ft*).

2. Color-television receiver circuit for carrying out the frequency conversion claimed in claim 1, which contains the following subcircuits:
- a tunable oscillator (ho) comprising a 90° phase shifter (pd) and delivering a first output signal and a second output signal separated in phase by 90° and having a frequency within the spectrum of the RF signal (hf);
- a first signal mixer (s1) to which the first output signal, i.e., the oscillator signal (fo), and the RF signal (hf) are applied, and whose output is a first mixer signal (m1);
- a second signal mixer (s2) to which the second output signal of the oscillator (ho) and the RF signal (hf) are applied, and whose output is a second mixer signal (m2);
- a first demodulator (g1) supplied with the first mixer signal (m1) and a first demodulating signal (d1), and a second demodulator (g2) supplied with the second mixer signal (m2) and a second demodulating signal (d2), the outputs of the first and second demodulators (g1, g2) being fed through an adder (ad) or a substracter to a video low-pass filter (vt) whose output is the composite color signal plus the sound signal (= the base signal) (f) at baseband, and whose passband is equal to the bandwidth of the base signal (f);
- a first limiter (b1) fed with the first mixer signal (m1), and a second limiter (b2) fed with the second mixer signal (m2), the outputs of the limiters being the first limited mixer signal (mb1) and the second limited mixer signal (mb2), respectively, and
- a first frequency comparator (fv) whose first input signal comes from a burst-signal-processing circuit (b) and has half the chrominance-subcarrier frequency (= first reference signal) (vb) referred to the usual baseband position, and whose second input signal is the first limited mixer signal (mb1) and whose output serves as a control signal (fs) for adjusting the frequency of the oscillator (ho),
characterized by the following features:
- The first frequency comparator (fv) is a beat comparator (sv) to which an offset signal (os) is applied in addition to the first reference signal (vb) and the first limited mixer signal (mb1);
- the beat comparator (sv) controls the frequency of the oscillator (ho) by means of a signed frequency shift in such a way that the beat frequency between the first reference signal (vb) and the first limited mixer signal (mb1) is equal to the frequency of the offset signal (os), and
- the beat comparator (sv) contains, besides the stages for the beat comparison, signal-processing stages delivering the control signal (fs) for the oscillator (ho).

3. A color-television receiver circuit as claimed in claim 2 for carrying out the frequency conversion claimed in claim 1, characterized in
- that, for an RF signal (hf) transmitted by the NTSC color-television standard, the frequency of the offset signal (os) is either $-(1/4+n)fz$ or $+(3/4+n)fz$, or
- that, for an RF signal (hf) transmitted by the PAL color-television standard, the frequency of the offset signal (os) is either $-(3/8+n)fz$ or $+(5/8+n)fz$, where $n = 0, 1, 2, ...,$ fz is the horizontal frequency, and the negative and positive signs indicate, respectively, a decrease and an increase in the frequency of the oscillator (ho).

4. A color-television receiver circuit as claimed in claim 2 or 3, characterized in that the beat comparator (sv) includes a second frequency comparator to which the first limited mixer signal (mb1) and the first reference signal (vb) are applied, and whose output signal is slightly changed by being combined with a signal (os') derived from the offset signal (os), such that the oscillator (ho) changes the frequency of its output signal by an amount corresponding to the frequency of the offset signal (os).

5. A color-television receiver circuit as claimed in any one of claims 2 to 4, characterized by the following features:
- The beat comparator (sv) is a digital circuit clocked by a system clock (cl) whose phase is locked to the phase of the color burst contained in the base signal (f), and whose frequency is an integral multiple of the frequency of the color burst, and it contains the following subcircuits:
- a digital frequency comparator (fg) as the second frequency comparator;
- a transfer control circuit (st) which passes the respective output state of the digital frequency comparator (fg) as an up enable signal or a count-down signal (r) to an up/down counter (8), to which the system clock (cl) is applied as a count-up signal;
- an offset stage (ot) which is controlled by the offset signal (os) and delivers additional count-down pulses to the up/down counter (8), and
- a digital-to-analog converter (9) which converts the count of the up/down counter (8) into the control signal (fs).

6. A color-television receiver circuit as claimed in claim 2 or 3, characterized in that the beat comparator (sv) contains a single-sideband mixer as an offset mixer whose two inputs are supplied with the first limited mixer signal (mb1) or the first reference signal (vb) and the offset signal (os), respectively.

7. A color-television receiver circuit as claimed in claim 6, characterized in that the offset mixer is a circuit which adds the pulse train at its second input to the pulse train at its first input or subtracts it from the pulse train at its first input.

8. Color-television receiver circuit for carrying out the frequency conversion claimed in claim 1, which contains the following subcircuits:
- a tunable oscillator (ho) comprising a 90° phase shifter (pd) and delivering a first output signal and a second output signal separated in phase by 90° and having a frequency within the spectrum of the RF signal (hf);
- a first signal mixer (s1) to which the first output signal of the oscillator (ho) and the RF signal (hf) are applied, and whose output is a first mixer signal (m1);
- a second signal mixer (s2) to which the second output signal of the oscillator (ho) and the RF signal (hf) are applied, and whose output is a second mixer signal (m2),
- a first demodulator (g1) supplied with the first mixer signal (m1) and a first demodulating signal (d1), and a second demodulator (d2) supplied with the second mixer signal (m2) and a second demodulating signal (d2), the outputs of the first and second demodulators (g1, g2) being fed through an adder (ad) or a subtracter to a video low-pass filter (vt) whose output is the composite color signal plus the sound signal, the base signal (f), in the usual baseband position, and whose passband is equal to the bandwidth of the base signal (f);
- a first limiter (b1) fed with the first mixer signal (m1), and a second limiter (b2) fed with the second mixer signal (m2), the outputs of the limiters being the first limited mixer signal (mb1) and the second limited mixer signal (mb2), respectively, and
- a first frequency comparator (fv) one input signal of which is the first limited mixer signal (mb1), and the output of which serves as the control signal (fs) for adjusting the frequency of the oscillator (ho), characterized by the following features:
- The first input signal of the first frequency comparator (fv), a second reference signal (bz), is frequency- and phase-locked to a frequency of the television standard, preferably to the horizontal frequency (fz);
- the first frequency comparator (fv) is a beat correction circuit (sk) to which the second reference signal (bz), an offset signal (os), and a frequency-difference signal (df) are applied;
- the frequency-difference signal (df) is a signal at the difference frequency between half the chrominance-subcarrier frequency, referred to the usual baseband position, and the frequency of the second reference signal (bz);
- the beat correction circuit (sk) controls the frequency of the oscillator (ho) by means of a signed frequency shift in such a way that the beat frequency between the frequency of the first limited mixer signal (mb1) and the sum obtained by adding the frequency of the frequency-difference signal (df) with the correct sign to the frequency of the second reference signal (bz) is equal to the frequency of the offset signal (os), and
— the beat correction circuit (sk) contains, besides the stages for the beat correction, signal-processing stages delivering the control signal (fs) for the oscillator (ho).

9. A color-television receiver circuit as claimed in any one or more of claims 2 to 8, characterized by the following features:
— The first and second mixer signals (m1, m2) are digitized by means of a first analog-to-digital converter (w1) and a second analog-to-digital converter (w2), respectively, and are fed as data signals to a first digital low-pass filter (t1) and a second digital low-pass filter (t2), respectively, whose passbands are equal to half the bandwidth of the base signal (f);
— the output data of the first and second digital low-pass filters (t1, t2) are fed to the two inputs of a first digital quadrature mixer (q1) and a second digital quadrature mixer (q2) whose output data are fed through a digital adder (su) or a digital subtracter to a digital root solver (ra);
— the output signal of the digital root solver (ra) is the digitized base signal (f'), and
— the first and second limited mixer signals (mb1, mb2) are the most significant bits or combinations of most significant bits of the outputs of the first analog-to-digital converter (w1) and the second analog-to-digital converter (w2), respectively.

**Revendications**

1. Conversion de fréquence d'un signal HF (hf) transmis pour des récepteurs de télévision en couleurs à la fréquence de la porteuse image et de la porteuse son selon la "troisième méthode" au moyen d'un repli de fréquence approprié qui fait apparaître, transformées dans la bande de base, les fréquences de la porteuse image, de la sous-porteuse de chrominance et au moins d'une porteuse son, caractérisée en ce que le moirage variable dans le temps/dans l'espace apparaissant sur l'écran en raison des différences inévitables des voies des signaux est rendu invisible au moyen d'un décalage de fréquence entre la fréquence transformée des images et de la sous-porteuse de chrominance, qui présente les valeurs suivantes: dans la norme de télévision couleurs
NTSC: $-(1/4+n)fz$ ou $+(3/4+n)fz$,
dans la norme de télévision couleurs
PAL: $-(3/8+n)fz$ ou $+(5/8+n)$ où fz,
n = 0, 1, 2, ... et fz est la fréquence de lignes et le signe plus ou moins indique la déviation positive ou négative de la fréquence de la porteuse image transformée (bt*) par rapport à l'égalité de la fréquence de la porteuse image transformée (bt*) et de la sous-porteuse de chrominance transformée (ft*).

2. Circuit de récepteur de télévision en couleurs pour la réalisation de la conversion de fréquence selon la revendication 1 comprenant les circuits élémentaires suivants:
— un oscillateur commandé en fréquence (ho) avec un circuit à rotation de phase à 90 degrés (pd) pour un premier et un deuxième signal de sortie à décalage de phase de 90° l'un par rapport à l'autre, ayant chacun une fréquence située à l'intérieur du spectre du signal HF (hf),
— un premier mélangeur de signaux (s1) auquel sont transmis du côté entrée le premier signal de sortie, le signal de l'oscillateur (fo) et le signal HF (hf) et dont le signal de sortie est un premier signal de mélange (m1),
— un deuxième mélangeur de signaux (s2) auquel sont transmis du côté entrée le deuxième signal de sortie de l'oscillateur (ho) et le signal HF (hf) et dont le signal de sortie est un deuxième signal de mélange (m2),
— un premier et un deuxième démodulateur (g1, g2), qui sont alimentés par un premier et un deuxième signal de mélange (m1, m2) et par un premier et un deuxième signal de démodulation (d1, d2), et dont les signaux de sortie sont transmis, par un additionneur (ad) ou par un soustracteur, à un passe-bas vidéo (vt) dont le signal de sortie est le signal composite couleurs comprenant le signal sonore (= le signal de base) (f), à la position normale de la bande de base, et dont la bande de transmission est égale à la largeur de bande du signal de base (f),
— un premier et un deuxième limiteur (b1, b2), auxquels le premier et le deuxième signal de mélange (m1, m2) sont transmis et dont le signal de sortie est le premier et le deuxième signal de mélange limité (mb1, mb2), et
— un premier circuit de comparaison de fréquences (fv) dont le premier signal d'entrée à fréquence égale à la moitié de la fréquence de la sous-porteuse de chrominance (= signal de comparaison) (vb) provient, en fonction de la position normale de la bande de base, d'un circuit de traitement des giclées de signaux de couleur (b) et dont le deuxième signal d'entrée est le premier signal de mélange limité (mb1), et dont le signal de sortie sert, en tant que signal de commande (fs) au réglage de la fréquence de l'oscillateur (ho), caractérisé en ce que:
— le premier circuit de comparaison de fréquences (fv) est un circuit de comparaison du battement (sv) auquel, en plus du signal de comparaison (vb) et du premier signal de mélange limité (mb1), un signal de décalage (os) est transmis,
— le circuit de comparaison du battement (sv) commande la fréquence de l'oscillateur (ho) au moyen d'un décalage de fréquence précédé d'un signe, de manière que la fréquence de battement entre le signal de comparaison (vb) et le premier signal de mélange limité (mb1) soit égale à la fréquence du signal de décalage (os), et
— le circuit de comparaison du battement (sv) contient, en plus des étages servant purement à la comparaison du battement, d'autres étages de traitement des signaux qui émettent le signal de commande (fs) de l'oscillateur (ho).

3. Circuit pour récepteur de télévision en couleurs selon la revendication 2 pour la réalisation de la conversion de fréquence selon la revendication 1, caractérisé en ce que:
— dans le cas du signal HF (hf) transmis selon la norme de télévision couleurs NTSC, la fréquence du signal de décalage (os) est soit $-(1/4+n)fz$ soit $+(3/4+n)$ fz, ou

– dans le cas du signal HF (hf) transmis selon la norme de télévision couleurs PAL, la fréquence du signal de décalage (os) est soit $-(3/8+n)$fz soit $+(5/8+n)$fz, où $n = 0, 1, 2, \ldots$ et fz est la fréquence de lignes et le signe négatif ou le signe positif correspondant à une diminution ou à une élévation de la fréquence de l'oscillateur (ho).

4. Circuit pour récepteur de télévision en couleurs selon l'une quelconque des revendications 2 ou 3, caractérisé en ce que le circuit de comparaison du battement (sv) contient un deuxième circuit de comparaison de fréquences auquel sont transmis côté entrée le premier signal de mélange limité (mb1) et le signal de comparaison (vb) et dont le signal de sortie est, par combinaison avec un signal (os') dérivé du signal de décalage (os), modifié de façon minime de telle sorte que l'oscillateur (ho) fait varier la fréquence de son signal de sortie de la fréquence correspondant au signal de décalage (os).

5. Circuit pour récepteur de télévision en couleurs selon l'une quelconque des revendications 2 à 4, caractérisé en ce que
– le circuit de comparaison du battement (sv) est un circuit numérique commandé par une horloge de système (cl) dont la phase est couplée de façon fixe à celle du signal de synchronisation de couleur contenu dans le signal de base (f) et dont la fréquence est un multiple entier de celle du signal de synchronisation de couleur, et il comprend les circuits élémentaires suivants:
– un circuit numérique de comparaison de fréquences (dg) en tant que deuxième circuit de comparaison de fréquences,
– un circuit de commande d'enregistrement (st) qui transmet l'état de sortie du circuit numérique de comparaison de fréquences (fg) en tant que signal de validation ascendant ou de signal de comptage descendant (r) à un compteur ascendant-descendant (8), auquel la commande de système (cl) est transmise en tant que signal de comptage ascendant,
– un étage de décalage (ot) qui, commandé par le signal de décalage (os), envoie des impulsions de comptage descendant additionnelles au compteur ascendant-descendant (8), et
– un convertisseur numérique-analogique (9) qui transforme l'état de comptage du compteur ascendant-descendant (8) en signal de commande (fs).

6. Circuit pour récepteur de télévision en couleurs selon l'une quelconque des revendications 2 ou 3, caractérisé en ce que le circuit de comparaison du battement (sv) contient un mélangeur à bande latérale unique en tant que mélangeur de décalage, à l'une des entrées duquel est transmis le premier signal de mélange limité (mb1) ou le signal de comparaison (vb) et à l'autre entrée duquel est transmis le signal de décalage (os).

7. Circuit pour récepteur de télévision en couleurs selon la revendication 6, caractérisé en ce que le mélangeur de décalage est un circuit qui additionne à la séquence d'impulsions de sa première entrée la séquence d'impulsions de sa deuxième entrée ou l'en soustrait.

8. Circuit pour récepteur de télévision en couleurs pour la réalisation de la conversion de fréquence selon la revendication 1, qui comprend les circuits élémentaires suivants:
– un oscillateur commandé en fréquence (ho) avec un circuit à rotation de phase à 90 degrés (pd) pour un premier et un deuxième signal de sortie à décalage de phase de 90° l'un par rapport à l'autre, la fréquence de chacun étant située à l'intérieur du spectre du signal HF (hf),
– un premier mélangeur de signaux (s1) auquel le premier signal de sortie de l'oscillateur (ho) et le signal HF (hf) sont transmis du côté entrée et dont le signal de sortie est un premier signal de mélange (m1),
– un deuxième mélangeur de signaux (s2) auquel le deuxième signal de sortie de l'oscillateur (ho) et le signal HF (hf) sont transmis du côté entrée et dont le signal de sortie est un deuxième signal de mélange (m2),
– un premier et un deuxième démodulateur (g1, g2) qui sont alimentés respectivement par le premier et par le deuxième signal de mélange (m1, m2) ainsi que par le premier et le deuxième signal de démodulation (d1, d2), et dont les signaux de sortie sont transmis, par un additionneur (ad) ou par un soustracteur, à un passe-bas vidéo (vt) dont le signal de sortie est le signal composite couleurs comprenant le signal sonore (= le signal de base) (f) à la position normale de la bande de base et dont la bande de transmission est égale à la largeur de bande du signal de base (f),
– un premier et un deuxième limiteur (b1, b2) auxquels sont transmis respectivement le premier et le deuxième signal de mélange (m1, m2) et dont le signal de sortie est respectivement le premier et le deuxième signal de mélange limité (mb1, mb2), et
– un premier circuit de comparaison de fréquences (fv) dont un signal d'entrée est le premier signal de mélange limité (mb1) et dont le signal de sortie sert, en tant que signal de commande (fs), à régler la fréquence de l'oscillateur (ho), caractérisé en ce que:
– le premier signal d'entrée du premier circuit de comparaison de fréquences (fv), le signal de référence (bz), est couplé par sa fréquence et sa phase avec une fréquence propre à la norme de télévision, en particulier avec la fréquence de lignes (fz),
– le premier circuit de comparaison de fréquences (fv) est un circuit de correction de battement (sk) auquel le signal de référence (bz) et, en tant qu'autres signaux d'entrée, un signal de décalage (os) et un signal de différence de fréquence (df) sont transmis,
– le signal de différence de fréquence (df) est un signal à fréquence de différence située entre la moitié de la fréquence de la sous-porteuse de chrominance, par rapport à la position normale de la bande de base, et la fréquence du signal de référence (bz),
– le circuit de correction de battement (sk) commande la fréquence de l'oscillateur (ho) au moyen d'un déplacement de la fréquence précédé d'un signe, de manière que la fréquence de battement entre la fréquence du premier signal de mélange limité (mb1) et la somme de la fréquence, additionnée avec le signe précédent voulu à la fréquence du signal de référence (bz), du signal de différence de fréquence (df) est égale à la fréquence du signal de décalage (os), et

— le circuit de correction de battement (sk) contient, en plus des étages servant purement à la comparaison de la correction du battement, d'autres étages de traitement des signaux qui émettent le signal de commande (fs) de l'oscillateur (ho).

9. Circuit pour récepteur de télévision en couleurs selon l'une quelconque des revendications 2 à 8, caractérisé en ce que:

— le premier et le deuxième signal de mélange (m1, m2) est, au moyen d'un premier et d'un deuxième convertisseur analogique-numérique (w1, w2), numérisé et alimente, en tant que signal de données, un premier et un deuxième passe-bas numérisé (t1, t2) dont la bande de transmission est égale à la moitié de la largeur de bande du signal de base (f),

— les données de sortie du premier et du deuxième passe-bas numériques (t1, t2) sont respectivement transmises aux deux entrées d'un premier et d'une deuxième mélangeur en quadrature (q1, q2) dont les données de sorties alimentent, par un additionneur numérique (su) ou un soustracteur numérique, un extracteur de racine carrée numérique (ra),

— le signal de sortie de l'extracteur de racine carrée numérique (ra) est le signal de base numérisé (f'),

— le premier et le deuxième signal de mélange limité (mb1, mb2) est le signal du chiffre le plus élevé ou une combinaison des différents signaux des chiffres les plus élevés de la sortie correspondante du premier et du deuxième convertisseur analogique-numérique (w1, w2).

FIG. 1

EP 0 213 221 B1

FIG . 2

FIG . 3

FIG . 4

FIG. 5

FIG. 6

FIG. 7

FIG. 8

FIG.9

FIG.11

FIG.10

FIG . 12

FIG.13